# EUROPÄISCHE PATENTANMELDUNG

(11) **EP 4 471 308 A1**
(43) Veröffentlichungstag der Anmeldung: **04.12.2024**
(21) Anmeldenummer: 23176089.3
(22) Anmeldetag: 30.05.2023
(51) Int. Cl.: F16K 27/06, F16K 5/06, F16K 31/04, F16K 37/00

(54) **VENTIL MIT STECKCODIERTER STARRER DREHKUPPLUNG UND VERFAHREN ZUM BEHEBEN EINER FEHLMONTAGE DES VENTILS**

(71) Anmelder: AFRISO-EURO-INDEX GmbH, 74363 Güglingen (DE)
(72) Erfinder: HEINZ, Thomas, 74374 Zaberfeld (DE); STUSSIG, Tim, 74363 Güglingen (DE)
(74) Vertreter: Kohler Schmid Möbus Patentanwälte

(57) **Zusammenfassung**

Ein erfindungsgemäßes Ventil (1') umfasst
- ein Ventilgehäuse (2) mit mehreren Ventilöffnungen (3, 4, 5),
- einen im Ventilgehäuse (2) um eine Drehachse (6) frei drehbar gelagerten Ventilkörper (7), der zwei der mehreren Ventilöffnungen (3, 4, 5) in einer ersten Ventildrehstellung miteinander verbindet und in einer gegenüber der ersten Ventildrehstellung um 90° verdrehten, zweiten Ventildrehstellung gegeneinander sperrt, wobei zwei Ventilöffnungen (4, 5) einander bezüglich der Drehachse (6) diametral gegenüberliegen,
- einen Elektromotor (8) zum Vor- und Zurückdrehen des Ventilkörpers (7) jeweils um 90° zwischen der ersten und der zweiten Ventildrehstellung, , und
- eine zwischen Ventilkörper (7) und Elektromotor (8) angeordnete, starre Drehkupplung (10), die, jeweils drehfest, einenends mit dem Ventilkörper (7) und anderenends mit einer Antriebswelle (9) des Elektromotors (8) steckverbunden ist,
wobei die Steckkontur der Antriebswelle (9) und die zugehörige Gegensteckkontur (23) der Drehkupplung (10) einen bezüglich der Drehachse (6) nicht-drehsymmetrischen Steckquerschnitt aufweisen.

## Beschreibung

Die vorliegende Erfindung betrifft ein Ventil, insbesondere 3/2- oder 2/2-Wegeventil, ein Baukastensystem zur Herstellung eines solchen Ventils sowie auch ein Verfahren zum Beheben einer Fehlmontage eines solchen Ventils.

Derartige Ventil sind bekannt und werden beispielsweise als Umschalt- oder Mischventile eingestezt. Die am Markt befindlichen Umschaltventilventile steuern durch ein drehbares Küken den Fluidfluss. Klassische Anwendungen sind beispielsweise Heizungsanlagen, bei denen das erwärmte Wasser entweder in den Trinkwasserspeicher oder direkt in den Heizkreis geleitet wird. Das Ventil ist somit primärseitig in der Regel durch Schraubverbindungen mit der Heizungsanlage verbunden (Anschluss z.B. gekennzeichnet mit "AB") und steuert das Medium zu Ausgang "A" (Trinkwasserspeicher) oder zu Ausgang "B" (Heizkreis). Die Richtungsänderung der Strömung erfolgt durch eine Drehbewegung des Kükens. Da das Küken an der Mantelfläche mit Öffnungen versehen ist, wird je nach Drehwinkel Anschluss "A" oder "B" geöffnet bzw. versperrt. Die Drehbewegung des Kükens wird durch einen Elektroantrieb durchgeführt, der mechanisch an das Ventil fixiert ist. Mittels einer elektrotechnischen Steuerung werden die notwendigen Drehbefehle gegeben.

Die Anordnungen, Anzahl und Bezeichnungen der Ein- und Ausgänge können variieren. Je nach Anordnung der Ein- und Ausgänge am Ventilkörper werden die Ventile als Umschaltventile oder Mischventile eingesetzt. Während das Umschaltventil als Zielsetzung den kompletten Fluidfluss umlenken soll, sind beim Mischventil Zwischenstellungen erwünscht, z.B. um zwei Medien durch zwei halbgeöffnete Bohrungen zu mischen. Je nach Anwendung sind unterschiedliche mechanische Anordnungen (Positionen der Ventilöffnungen am Ventilgehäuse und am Küken) und Steuerungen notwendig.

Ein Umschaltventil wird, wie beispielhaft oben beschrieben, am Eingang "AB" angeströmt und leitet das Medium über den Elektroantrieb an den Ausgang "A" oder "B". Ist das Umschaltventil mit seinen Ausgängen "A" und "B" in einer Rohrleitung falsch herum eingebaut, muss das gesamte Umschaltventil ausgebaut, gedreht und wieder eingebaut werden, da der Elektromotor in der Regel zum Ventil kodiert ist, damit bei einer Wiederholmontage der Elekromotor nicht verdreht montiert werden kann. Der gesamte Ausbau eines Ventils ist nachteilig, da in der Regel die Fehlmontage erst dann auffällt, wenn die Anlage mit Heizungswasser gefüllt und betriebsbereit ist, sodass das Wasser wieder abgelassen werden muss.

Demgegenüber ist es die Aufgabe der Erfindung, am Ventil die interne Strömungsrichtung ändern zu können, ohne in den Heizkreis eingreifen bzw. ohne das Ventil öffnen oder ausbauen zu müssen.

Diese Aufgabe wird durch ein Ventil mit den Merkmalen von Anspruch 1 gelöst.

Bevorzugt weisen die Steckkontur der Antriebswelle und die zugehörige Gegenstecckontur der Drehkupplung einen T-förmigen Steckquerschnitt auf.

Weiter bevorzugt sind der Elektromotor, insbesonder das Motorgehäuse, und das Ventilgehäuse miteinander steckverbunden, wobei die Steckkontur des Elektromotors und die zugehörige Gegensteckkontur des Ventilgehäuses eine bezüglich der Drehachse zweizählige Drehsymmetrie aufweisen.

Besonders bevorzugt weisen der Elektromotor ein Motorgehäuse mit mehreren, insbesondere vier Fenstern und die Drehkupplung einen entlang der Drehrichtung des Ventilkörpers verschiedenfarbigen, insbesondere ringförmigen Stellungsanzeiger auf, der von außen jeweils durch die Fenster sichtbar ist, um mittel der unterschiedlichen Farben die Öffnungs- und Schließstellungen des Ventikörpers in der ersten und der zweiten Drehstellung anzuzeigen.

In einer vorteilhaften Weiterbildung dieser Ausführungsform weist der Stellungsanzeiger einen koaxial zur Drehachse an der Drehkupplung angeordneten Anzeigering und mindestens ein verschiedenfarbiges Ringsegment, insbesondere ein 90°-Ringsegment, auf, das am Anzeigering lösbar befestigt ist. Besonders bevorzugt sind zwei gleichfarbige Ringsegmente, insbesondere zwei gleichfarbige 90°-Ringsegmente, vorhanden, die am Anzeigering lösbar befestigt sind und je nach Ventilschema am Anzeigering anders angeordnet werden können.

In einer Erfindungsvariante sind die Drehkupplung und der Stellungsanzeiger als einteilges Bauteil ausgeführt. In einer alternativen Erfindungsvariante sind die Drehkupplung und der Stellungsanzeiger als separate Bauteile ausgeführt, die miteinander steckverbunden sind und bevorzugt eine mindestens zweizählige Steckdrehsymmetrie aufweisen, wobei die Drehkupplung die Steckkontur für den Ventilkörper und der Stellungsanzeiger die Gegensteckkontur für die Antriebswelle aufweisen.

Vorzugsweise ist der Ventilkörper als eine einstückige Kugelwelle aus Kunststoff mit einem kugelförmigen Drehlagerabschnitt und mit einem Wellenansatz ausgebildet. Der wirtschaftliche Vorteil eines solchen Kunststoffformteils besteht darin, dass der Fertigungs- und Montageprozess für ein zweites Bauteil entfällt. Ein weiterer Vorteil ergibt sich dadurch, dass mit einer relativ einfachen Montageplatte die Dichtelemente und die Kugelwelle am Gehäuse auf Position gehalten werden können.

Vorzugsweise ist der Ventilkörper in einem Lagergehäuse, welches in das Ventilgehäuse eingesetzt ist, drehbar gelagert und gegen das Ventilgehäuse und gegen das Lagergehäuse, jeweils mittels Dichtungen, abgedichtet. Das Lagergehäuse kann von oben in das oben offene Ventilgehäuse eingesetzt und darin mittels der Montageplatte gegen Herausfallen gesichert sein. Ein Verspannen von Bauteilen ist somit nicht erforderlich, wodurch die Gehäusebearbeitung im Fertigungsprozess vereinfacht ist.

In einer bevorzugten Erfindungsvariante ist das Ventil als ein 3/2-Wegeventil ausgeführt. In diesem Fall weist das Ventilgehäuse eine erste Ventilöffnung und zwei bezüglich der Drehachse diametral gegenüberliegende Ventilöffnungen auf, wobei die erste Ventilöffnung mittels des Ventilkörpers in der ersten Ventildrehstellung mit der einen und in der zweiten Ventildrehstellung mit der anderen der beiden diametral gegenüberliegenden Ventilöffnungen verbunden ist. Dabei kann die erste Ventilöffnung auf der dem Elektromotor gegenüberliegenden Seite des Ventilgehäuses oder zwischen den beiden diametral gegenüberliegenden Ventilöffnungen angeordnet sein.

In einer anderen bevorzugten Erfindungsvariante ist das Ventil als ein 2/2-Wegeventil ausgeführt. In diesem Fall weist das Ventilgehäuse zwei bezüglich der Drehachse diametral gegenüberliegende Ventilöffnungen auf, die mittels des Ventilkörpers in der ersten Ventildrehstellung miteinander verbunden und und in der zweiten Ventildrehstellung gegeneinander gesperrt sind.

Die Erfindung betrifft auch ein Baukastensystem zur Herstellung eines wie oben ausgebildeten Ventils, umfassend:
- einen Elektromotior,
- mehrere unterschiedliche Ventilgehäuse,
- mindestens einen Ventilkörper, insbesondere mindestens zwei unterschiedliche Ventilkörper,
- ein Lagergehäuse, und
- eine Drehkupplung.

Optional kann das Baukastensystem auch noch einen Anzeigering mit einem oder zwei Ringsegmanten aufweisen.

Die Erfindung betrifft schließlich auch ein Verfahren zum Beheben einer Fehlmontage eines wie oben ausgebildeten Ventils, das mit seinen beiden einander diametral gegenüberliegenden Ventilöffnungen falsch herum in einer Leitung montiert ist, mit folgenden Verfahrensschritten:
- Demontieren des Elektromotors und der Drehkupplung;
- manuelles Verdrehen des Ventilkörpers um 180°, insbesondere mittels eines Werkzeugs;
- Steckverbinden der um 180° gedrehten Drehkupplung mit dem Ventilkörper, um die Drehkupplung und den Ventilkörper miteinander drehfest zu verbinden;
- Steckverbinden des Elektromotors mit der Drehkupplung, um die Drehkupplung und die Antriebswelle des Elektromotors miteinander drehfest zu verbinden; und
- Befestigen des Elektromotors am Ventilgehäuse.

Die Umschaltlogik ist somit umgekehrt, und das Ventil und der Elektromotor sind zueinander kodiert, so dass später bei der erneuten Abnahme des Elektromotors eine Fehlmontage ausgeschlossen ist.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Frontansicht eines erfindungsgemäßen 3/2-Wegeventils mit einem Elektromotor und mit einem im Längsschnitt gezeigten Ventilgehäuse;
- Fign. 2a-2c: das Ventilgehäuses in einer perspektivischen Ansicht (Fig. 2a), in einem Halbschnitt (Fig. 2b) und in einem Längsschnitt (Fig. 2c);
- Fig. 3: eine Explosionsdarstellung der am Ventilgehäuse montierten Einzelteile;
- Fig. 4: einen als Kugelwelle ausgebildeten Ventilkörper;
- Fig. 5: eine in Fig. 3 gezeigte, starre Drehkupplung mit einem ringförmigen Stellungsanzeiger;
- Fign. 6a, 6b: einen Längsschnitt des Ventilgehäuses mit dem Ventikörper in einer ersten Ventildrehstellung (Fig. 6a) und in einer zweiten Ventildrehstellung (Fig. 6b);
- Fign. 7a-7e: die einzelnen Verfahrensschritte zur Fehlerbehebung bei einem falsch angeschlossenen, erfindungsgemäßen 3/2-Wegeventil;
- Fig. 8: ein modifiziertes Ventilgehäuse eines erfindungsgemäßen 3/2-Wegeventils in einem Halbschnitt analog zu Fig. 2b;
- Fign. 9a, 9b: ein Ventilgehäuse eines erfindungsgemäßen 2/2-Wegeventils in einem Halbschnitt (Fig. 9a) analog zu Fig. 2b sowie einen als Kugelwelle ausgebildeten, zugehörigen Ventilkörper (Fig. 9b); und
- Fig. 10: die verschiedenen Komponenten eines Baukastensystems zur Montage von unterschiedlichen 3/2- und 2/2-Wegeventilen.

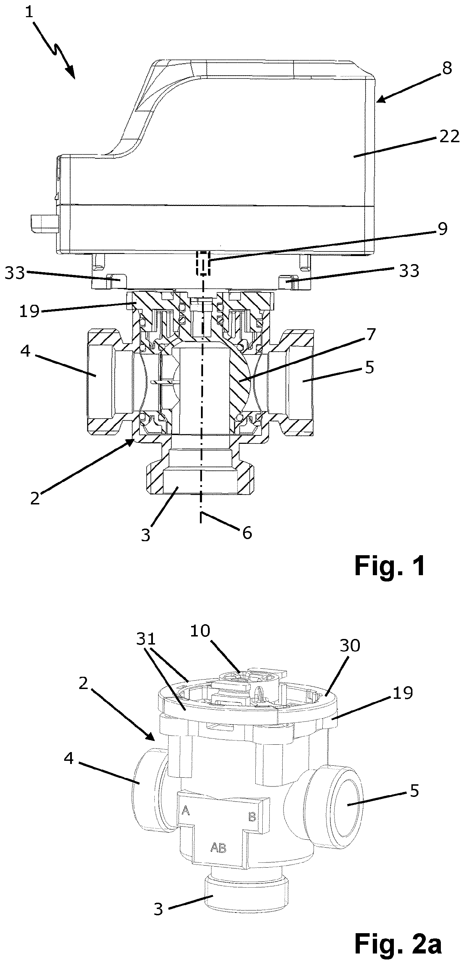

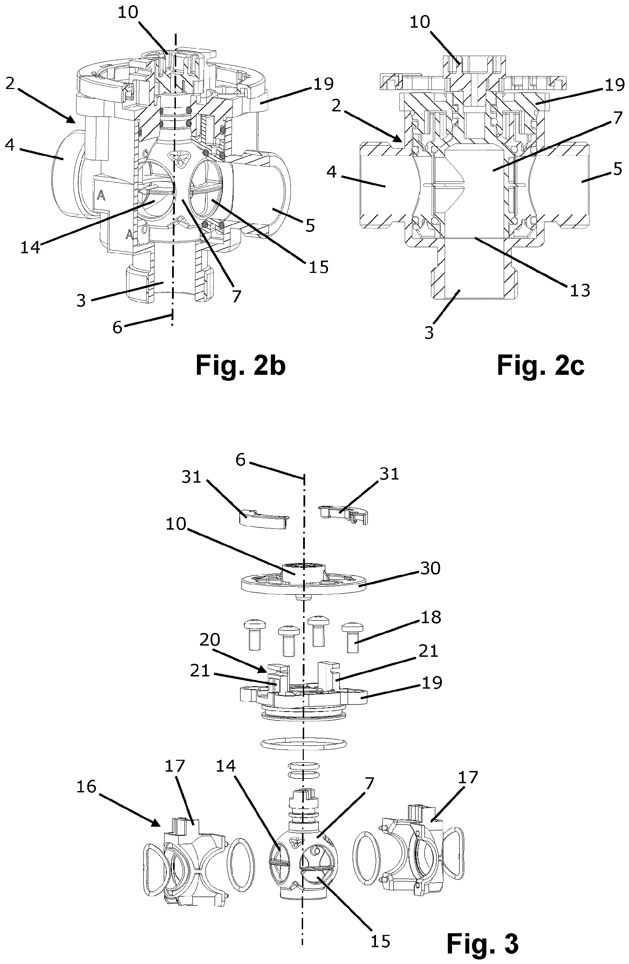

Das in **Fign. 1**, 2a-2c gezeigte 3/2-Wegeventil (Umschaltventil) **1** umfasst
- ein Ventilgehäuse **2** mit mehreren, hier drei Ventilstutzen bzw. Ventilöffnungen **3, 4, 5,**
- einen im Ventilgehäuse 2 um eine Drehachse **6** frei drehbar gelagerten Ventilkörper **7,** der die untere Ventilöffnung 3 in einer ersten Ventildrehstellung mit der linken Ventilöffnung 4 und in einer gegenüber der ersten Ventildrehstellung um 90° verdrehten, zweiten Ventildrehstellung mit der rechten Ventilöffnung 5 verbindet, wobei die linke und die rechte Ventilöffnung 4, 5 einander bezüglich der Drehachse 6 diametral gegenüberliegen,
- einen Elektromotor **8** mit einer Antriebswelle **9** zum Vor- und Zurückdrehen des Ventilkörpers 7 jeweils um 90° zwischen der ersten und der zweiten Ventildrehstellung, wobei der Elektromotor 8 am Ventilgehäuse 2 in einer von zwei möglichen, gegeneinander um 180° um die Drehachse 6 des Ventilkörpers 7 gewendeten Orientierungen befestigt ist, und
- eine zwischen Ventilkörper 7 und Elektromotor 8 angeordnete, starre Drehkupplung **10** (Fig. 2), die, jeweils drehfest, einenends mit dem Ventilkörper 7 und anderenends mit der Antriebswelle 9 des Elektromotors 8 steckverbunden ist.

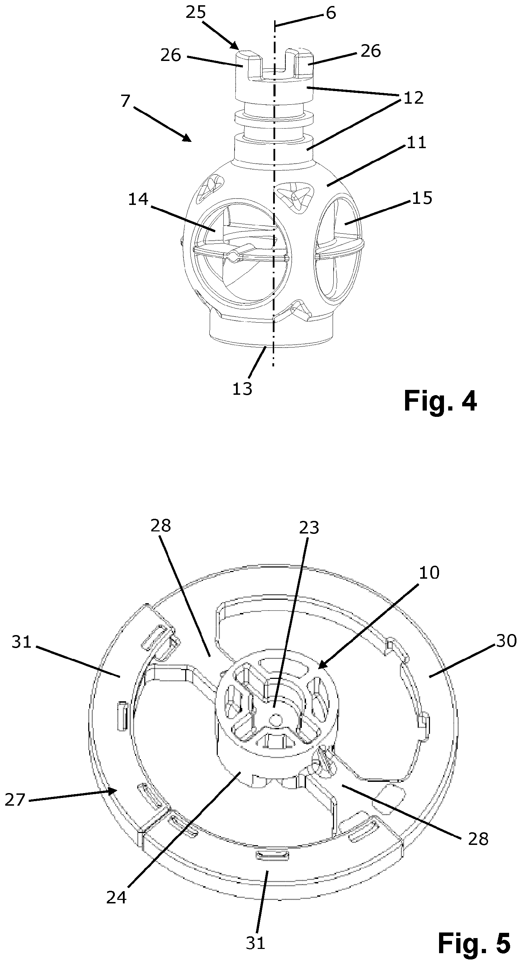

Wie in den **Fign. 3****,** **4** gezeigt, ist der Ventilkörper 7 als eine einstückige Kugelwelle mit einem kugelförmigen Drehlagerabschnitt **11** und mit einem Wellenansatz **12** ausgebildet.

Der Ventilkörper 7 weist einen Verbindungskanal mit einer nach unten offenen Kanalöffnung **13** und mit zwei gegeneinander in Drehrichtung des Ventilkörpers 7 um 90° versetzte, radial nach außen offene Kanalöffnungen **14, 15** auf. Der Ventilkörper 7 ist in einem Lagergehäuse **16,** welches in das oben offene Ventilgehäuse 2 eingesetzt ist, um die Drehachse 6 drehbar gelagert und mittels Dichtringen sowohl gegen das Ventilgehäuse 2 als auch gegen das Lagergehäuse 16 abgedichtet. Das Lagergehäuse 16 ist aus zwei, bevorzugt baugleichen Gehäusehälften **17** zusammengesetzt, die gegeneinander abgedichtet sind. Das Lagergehäuse 16 ist im Ventilgehäuse 2 mittels einer Montageplatte **19** gegen Herausfallen gesichert.

Die Montageplatte 19 ist an der Oberseite des Ventilgehäuses 2 mittels vier Schrauben **18** angeschraubt und weist eine hochstehende Steckkontur **20,** hier in Form zweier Steckvorsprünge **21,** auf. Die Steckkontur 20 wirkt mit einer am Motorgehäuse **22** des Elektromotors 8 vorhandenen, unterseitigen Gegensteckkontur (nicht gezeigt), z.B. in Form einer Steckaufnahme für die Steckvorsprünge 21, zusammen. Die Steckkontur 20 und die Gegensteckaufnahme haben eine bezüglich der Drehachse 6 zweizählige Drehsymmetrie, so dass das Motorgehäuse 22 wahlweise in zwei gegeneinander um 180° um die Drehachse 6 des Ventilkörpers 7 gewendeten Orientierungen auf die Steckkontur 20 aufgesteckt werden kann. Das aufgesteckte Motorgehäuse 22 ist an der Montageplatte 19 befestigt, bevorzugt mittels einer Bügelklammer (nicht gezeigt), die das Motorgehäuse 22 an den beiden Steckvorsprüngen 21 fixiert.

**Fig.** 5 zeigt die Drehkupplung 10, die oberseitig eine hier als Steckaufnahme ausgebildete Steckkontur **23** zur Steckverbindung mit einer Gegensteckkontur (nicht gezeigt) der Antriebswelle 9 aufweist. Die Steckkontur 23 und die Gegensteckkontur haben einen bezüglich der Drehachse 6 nicht-drehsymmetrischen, hier z.B. T-förmigen Steckquerschnitt. Unterseitig weist die Drehkupplung 10 eine hier z.B. als Steckaufnahme ausgebildete Steckkontur **24** zur Steckverbindung mit einer Gegenstecckontur **25** des Wellenansatzes 12, hier z.B. in Form zweier einander bezüglich der Drehachse 6 diametral gegenüberliegender Steckzapfen **26,** auf. Die Steckkontur 24 und die Gegensteckkontur 25 haben einen bezüglich der Drehachse 6 nicht-drehsymmetrischen Steckquerschnitt.

Weiter weist die Drehkupplung 10 einen entlang der Drehrichtung des Ventilkörpers 7 verschiedenfarbigen, hier z.B. ringförmigen Stellungsanzeiger **27** auf, der von außen jeweils durch die Fenster 33 sichtbar ist, um mittels seiner unterschiedlichen Farben die Öffnungs- und Schließstellungen des Ventikörpers 7 in der ersten und der zweiten Drehstellung anzuzeigen. Der Stellungsanzeiger 27 weist vorliegend einen mittels zweier Radialarme **28** koaxial zur Drehachse 6 an der Drehkupplung 10 angeformten Anzeigering **30** und mindestens ein 90°-Ringsegment **31,** hier zwei 90°-Ringsegmente 31, auf, das bzw. die am Anzeigering 30 angeclipst sind. Die beiden Ringsegmente 31 haben eine andere Farbe als der Anzeigering 30; beispielsweise sind die beiden Ringsegmente 31 grün und der Anzeigering 30 rot. Der rote Anzeigering 30 und die beiden grünen Ringsegmente 31 bilden zusammen den entlang der Drehrichtung des Ventilkörpers 7 verschiedenfarbigen Stellungsanzeiger 27 aus. Die Ringsegmente 31 können individuell, je nach verwendetem Ventilgehäuse 2 und Ventilkörper 7, am Anzeigering 30 angebracht werden. Statt eines oder zweier separater Ringsegmente 31 kann auch ein einziger - ggf. auch entlang der Drehrichtung des Ventilkörpers 7 unterbrochener - Anzeigering eingesetzt werden, der entlang der Drehrichtung verschiedenfarbig ist. Der Stellungsanzeiger 27 ist innerhalb des Motorgehäuses 2 angeordnet und von außen durch z.B. vier Fenster **33** (Fig. 1), je zwei zu beiden Seiten der Ventilöffnungen 4, 5, des Motorgehäuses 22 sichtbar, um den Schaltzustand zu signalisieren.

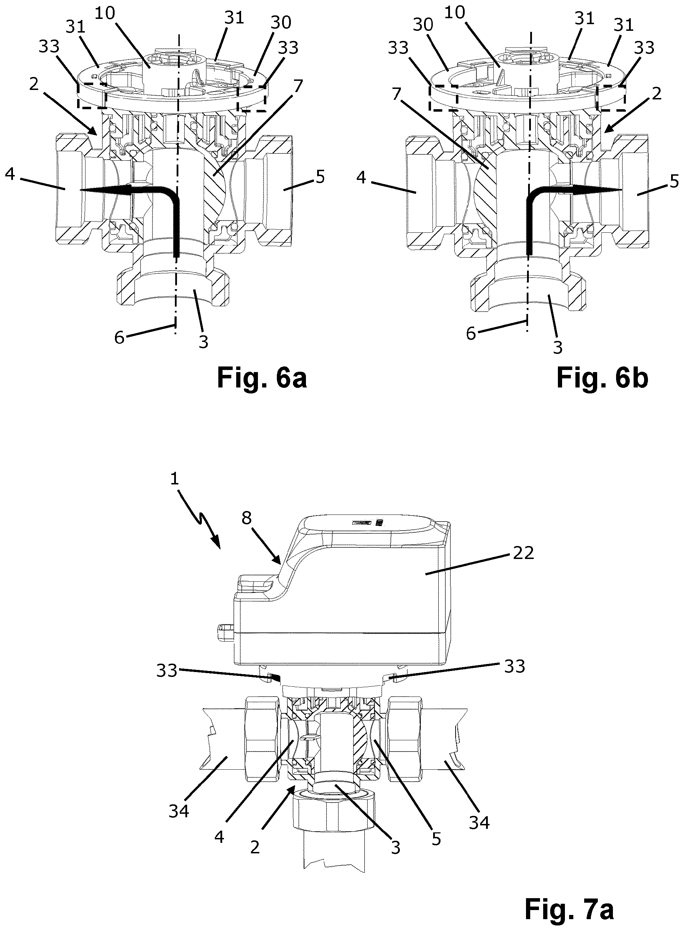

**Fig. 6a** zeigt den Ventikörper 7 in der ersten Ventildrehstellung, in der die erste Ventilöffnung 3 (Anschluss "AB") mit der linken Ventilöffnung 4 (Anschluss "A"), wie durch den Strömungspfeil angedeutet ist, verbunden und gegen die rechte Ventilöffnung 5 (Anschluss "B") gesperrt ist. In dem der linken Ventilöffnung 4 zugeordneten, linken Fenster 33 ist das grüne Ringsegment 31 sichtbar, was die geöffnete linke Ventilöffnung 4 anzeigt. In dem der rechten Ventilöffnung 5 zugeordneten, rechten Fenster 33 ist hingegen der rote Anzeigering 30 sichtbar, was die gesperrte rechte Ventilöffnung 5 anzeigt.

**Fig. 6b** zeigt den Ventikörper 7 in der zweiten Ventildrehstellung, in der die erste Ventilöffnung 3 mit der rechten Ventilöffnung 5, wie durch den Strömungspfeil angedeutet ist, verbunden und gegen die linke Ventilöffnung 5 gesperrt ist. In dem der linken Ventilöffnung 4 zugeordneten, linken Fenster 33 ist der rote Anzeigering 30 sichtbar, was die gesperrte linke Ventilöffnung 4 anzeigt. In dem der rechten Ventilöffnung 5 zugeordneten, rechten Fenster 33 ist hingegen das grüne Ringsegment 31 sichtbar, was die geöffnete rechte Ventilöffnung 5 anzeigt.

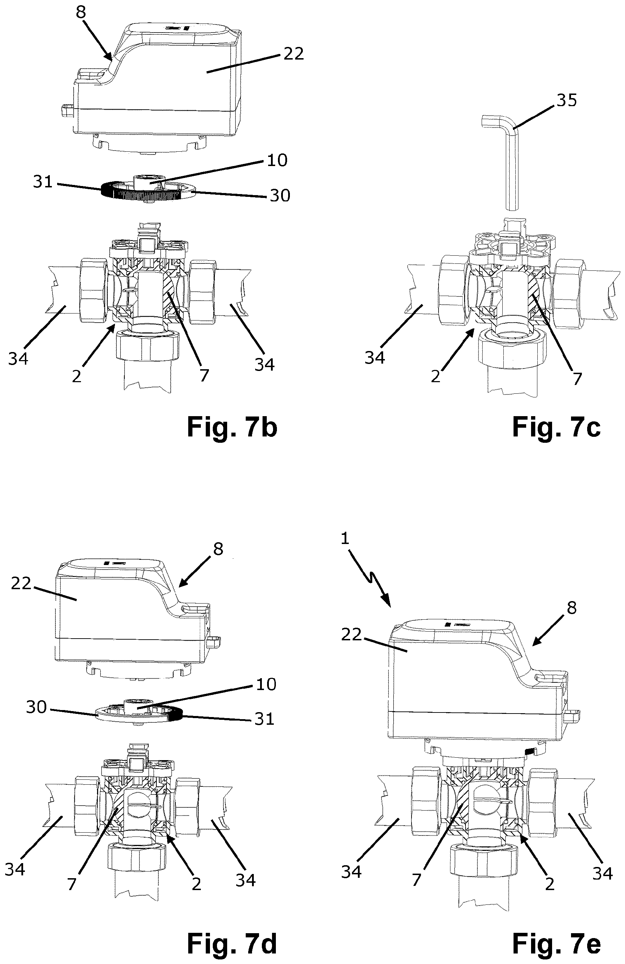

In Fign. 7a-7e sind die einzelnen Verfahrensschritten zum Beheben einer Fehlmontage eines Ventils 1' beschrieben, dessen Ventilghäuse 2 mit seinen beiden einander diametral gegenüberliegenden Ventilöffnungen 4, 5 falsch herum in einer Leitung **34** montiert ist (Fig. 7a). Zuerst werden der Elektromotor 8 und die Drehkupplung 10 demontiert (**Fig**. **7b**). Dann wird mittels eines in **Fig. 7c** gezeigten Werkzeugs (hier Inbusschlüssel) **35** der Ventilkörper 7 manuell um 180° gedreht, und auch die Drehkupplung 10 samt Stellungsanzeiger 27 und der Elektromotor 8 werden ebenfalls jeweils um 180° gedreht (**Fig. 7d**). Die Drehkupplung 10 wird wieder mit dem Ventilkörper 7 steckverbunden und dann der Elektromotor 8 mit seiner Antriebswelle 9 mit der Drehkupplung 10 steckverbunden. Abschließend wird der Elektromotor 8 am Ventilgehäuse 2 fixiert (**Fig. 7e**). Die Umschaltlogik ist somit umgekehrt, und das Ventilgehäuse 2 und der Elektromotor 9 sind zueinander kodiert, so dass bei einer erneuten Abnahme des Elektromotors 8 eine Fehlmontage des Elektromotors 9 ausgeschlossen ist. Im Ergebnis ist ein nachträglicher Wechsel der Ruheposition bei Fehlverbau möglich, ohne den Wasserkreislauf öffnen zu müssen.

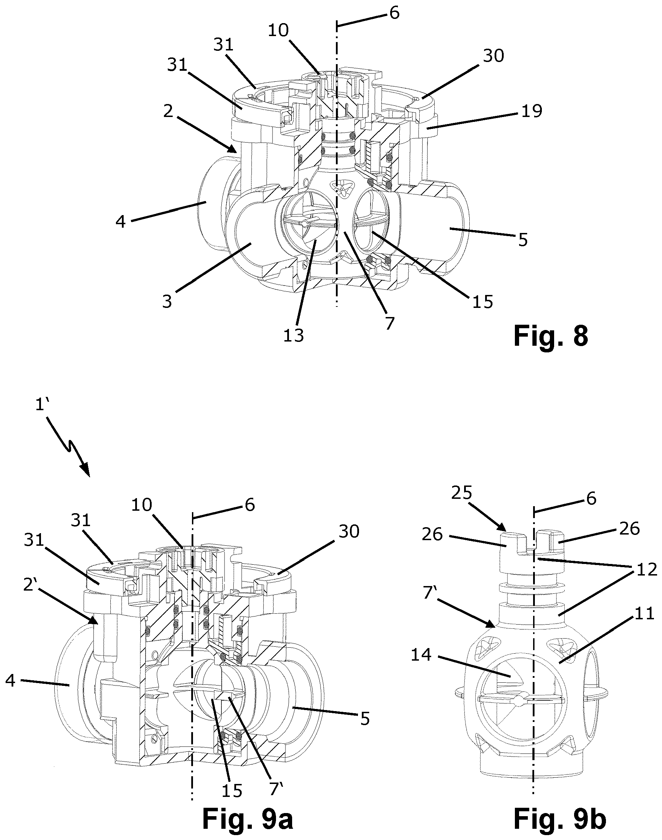

Vom Ventilgehäuse 2 der Fig. 2 unterscheidet sich das in **Fig. 8** gezeigte modifizierte Ventilgehäuse 2 lediglich dadurch, dass hier die erste Ventilöffnung 3 zwischen den beiden einander diametral gegenüberliegenden Ventilöffnungen 4, 5 angeordenet ist.

**Fig. 9a** zeigt ein Ventilgehäuse **2'** eines erfindungsgemäßen 2/2-Wegeventils **1'** und **Fig. 9b** einen als Kugelwelle ausgebildeten, zugehörigen Ventilkörper **7'.** Im Unterschied zum Ventilgehäuse 2 der Fign. 2 und 8 weist das Ventilgehäuse 2' nur zwei einander bezüglich der Drechachse 6 diametral gegenüberliegende Ventilöffnungen 4, 5 auf. Der Ventilkörper 7' unterscheidet sich vom Ventilkörper 7 der Fig.4 lediglich dadurch, dass hier der Verbindungskanal nur zwei einander bezüglich der Drehachse 6 diametral gegenüberliegende Kanalöffnungen 14, 15 aufweist, um in der ersten Ventildrehstellung die beiden Ventilöffnungen 4, 5 miteinander zu verbinden und in der zweiten Ventildrehstellung gegeneinander zu sperren.

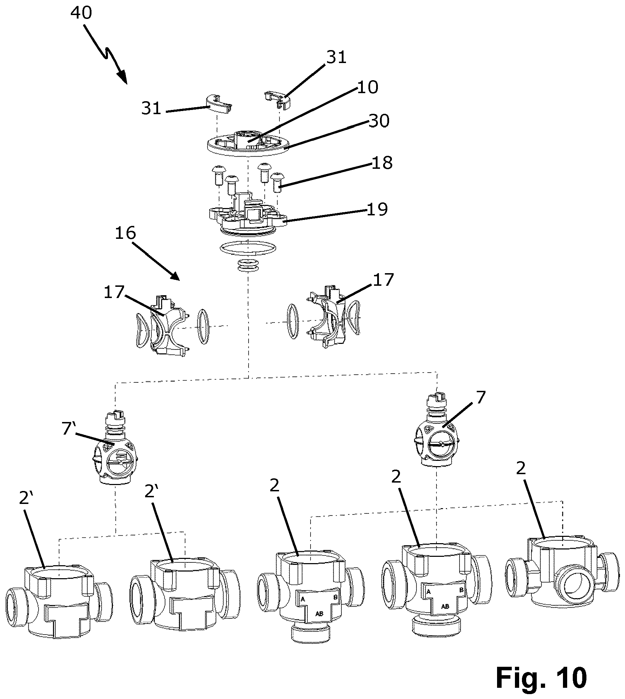

**Fig. 10** zeigt ein Baukastensystem **40** zur Herstellung von drei unterschiedlichen 3/2-Wegeventilen 1 und zwei unterschiedlichen 2/2-Wegeventilen 1'. Dazu umfasst das Baukastensystem 40
- mindestens einen Elektromotor 8,
- mindestens drei unterschiedliche Ventilgehäuse 2 für ein 3/2-Wegeventil 1, nämlich ein 3W-Gehäuse mit G3/4-Stutzengewinde, ein 3W-Gehäuse mit G1-Stutzen-gewinde und ein 3WE-Gehäuse mit G1-Stutzengewinde, sowie zwei unterschiedliche Ventilgehäuse 2' für ein 2/2-Wegeventil 1', nämlich ein 2W-Gehäuse mit G3/4-Stutzengewinde und ein 2W-Gehäuse mit G1-Stutzengewinde,
- mindestens einen Ventilkörper 7 mit drei Ventilöffnungen 3, 4, 5 für ein 3/2-Wegeventil 1 und einen Ventilkörper 7' mit zwei Ventilöffnungen 4, 5 für ein 2/2-Wegeventil 1',
- mindestens ein insbesondere aus zwei Gehäusehälften 17 zusammengesetztes Lagergehäuse 16,
- mindestens eine Montageplatte 19 mit vier Schrauben 18,
- mindestens eine Drehkupplung 10,
- mindestens zwei Ringsegmente 31; und
- optional mindestens einen Anzeigering 30 und zwei Ringsegmente 31.

Statt wie oben beschreiben einteilig, können in einer nicht gezeigten, alternativen erfindungsgemäßen Ausführungsform die Drehkupplung 10 mit der unterseitigen Steckkontur 24 und der Stellungsanzeiger 27 bzw. der Anzeigering 30 mit der oberseitigen Steckkontur 23 auch als separate Bauteile ausgeführt sein, die miteinander steckverbbindbar sind und eine mindestens zweizählige Steckdrehsymmetrie aufweisen. Somit lassen sich die Drehkupplung 10 und der Anzeigering 30, und damit die beiden Steckkonturen 23, 24, wahlweise um 180° (oder z.B. 90°-weise) gegeneinander verdreht zusammenstecken.

Zum Beheben der oben beschriebenen Fehlmontage des Ventils wird wie folgt vorgegangen. Der Elektromotor 8 und die Drehkupplung 10 samt Anzeigering 30 werden abgenommen und der Ventilkörper 7 manuell um 180° gedreht. Die Drehkupplung 10 und der Anzeigering 30 werden um 180° gegeneinander verdreht und erforderlichenfalls werden die grünen Ringsegmente 31 am Anzeigering 30 entsprechend umgesteckt. Die Drehkupplung 10 wird um 180° gedreht, wodurch sich der Anzeigering 30 in seiner ursprünglichen Drehposition befindet, und mit dem Ventilkörper 7 steckverbunden. Abschließend wird der Elektromotor 8 in seiner Ursprungsposition, also nicht um 180° gedreht, mit seiner Antriebswelle 9 mit der Drehkupplung 10 steckverbunden. Der Elektromotor 8 braucht sich somit am Ventilgehäuse 2 nur in einer einzigen Drehpoition befestigen lassen.

## Patentansprüche

1. Ventil (1; 1'), insbesondere 3/2- oder 2/2-Wegeventil, aufweisend:
- ein Ventilgehäuse (2; 2') mit mehreren Ventilöffnungen (3, 4, 5),
- einen im Ventilgehäuse (2; 2') um eine Drehachse (6) frei drehbar gelagerten Ventilkörper (7; 7'), der zwei der mehreren Ventilöffnungen (3, 4, 5) in einer ersten Ventildrehstellung miteinander verbindet und in einer gegenüber der ersten Ventildrehstellung um 90° verdrehten, zweiten Ventildrehstellung gegeneinander sperrt, wobei zwei Ventilöffnungen (4, 5) einander bezüglich der Drehachse (6) diametral gegenüberliegen,
- einen Elektromotor (8) zum Vor- und Zurückdrehen des Ventilkörpers (7; 7') jeweils um 90° zwischen der ersten und der zweiten Ventildrehstellung, und
- eine zwischen Ventilkörper (7; 7') und Elektromotor (8) angeordnete, starre Drehkupplung (10), die, jeweils drehfest, einenends mit dem Ventilkörper (7; 7') und anderenends mit einer Antriebswelle (9) des Elektromotors (8) steckverbunden ist,
wobei die Steckkontur der Antriebswelle (9) und die zugehörige Gegenstecckontur (23) der Drehkupplung (10) einen bezüglich der Drehachse (6) nicht-drehsymmetrischen Steckquerschnitt aufweisen.

2. Ventil nach Anspruch 1, **dadurch gekennzeichnet, dass** der Elektromotor (8) am Ventilgehäuse (2; 2') in einer von zwei möglichen, gegeneinander um 180° um die Drehachse (6) des Ventilkörpers (7; 7') gewendeten Orientierungen befestigt ist.

3. Ventil nach Anspruch 1 oder 2, **dadurch gekennzeichnet, dass** die Steckkontur der Antriebswelle (9) und die zugehörige Gegensteckkontur (23) der Drehkupplung (10) einen T-förmigen Steckquerschnitt aufweisen.

4. Ventil nach nach einem der vorhergehenden Ansprüche, **dadurch gekennzeichnet, dass** der Elektromotor (8) und das Ventilgehäuse (2; 2') miteinander steckverbunden sind, wobei die Steckkontur des Elektromotors (8) und die zugehörige Gegensteckkontur (20) des Ventilgehäuses (2; 2') eine bezüglich der Drehachse (6) zweizählige Drehsymmetrie aufweisen.

5. Ventil nach einem der vorhergehenden Ansprüche, **dadurch gekennzeichnet, dass** der Elektromotor (8) ein Motorgehäuse (22) mit mehreren, insbesondere vier Fenstern (33) aufweist und die Drehkupplung (10) einen entlang der Drehrichtung des Ventilkörpers (7) verschiedenfarbigen, insbesondere ringförmigen Stellungsanzeiger (27) aufweist, der von außen jeweils durch die Fenster (33) sichtbar ist, um mittels seiner unterschiedlichen Farben die Öffnungs- und Schließstellungen des Ventikörpers (7; 7') in der ersten und der zweiten Drehstellung anzuzeigen.

6. Ventil nach Anspruch 5, **dadurch gekennzeichnet, dass** der Stellungsanzeiger (27) einen koaxial zur Drehachse (6) an der Drehkupplung (10) angeordneten Anzeigering (30) und mindestens ein verschiedenfarbiges Ringsegment (31), insbesondere ein 90°-Ringsegment, aufweist, das am Anzeigering (30) lösbar befestigt ist.

7. Ventil nach Anspruch 6, **dadurch gekennzeichnet, dass** der Stellungsanzeiger (27) zwei gleichfarbige Ringsegmente (31), insbesondere zwei gleichfarbige 90°-Ringsegmente, aufweist, die am Anzeigering (30) lösbar befestigt sind.

8. Ventil nach einem der vorhergehenden Ansprüche, **dadurch gekennzeichnet, dass** die Drehkupplung (10) und der Stellungsanzeiger (27) als separate Bauteile ausgeführt sein, die miteinander steckverbunden sind und bevorzugt eine mindestens zweizählige Steckdrehsymmetrie aufweisen, wobei die Drehkupplung (10) die Steckkontur (24) für den Ventilkörper (7; 7') und der Stellungsanzeiger (27) die Gegensteckkontur (23) für die Antriebswelle (9) aufweisen.

9. Ventil nach einem der vorhergehenden Ansprüche, **dadurch gekennzeichnet, dass** der Ventilkörper (7; 7') als eine einstückige Kugelwelle mit einem kugelförmigen Drehlagerabschnitt (11) und mit einem Wellenansatz (12) ausgebildet ist.

10. Ventil nach einem der vorhergehenden Ansprüche, **dadurch gekennzeichnet, dass** der Ventilkörper (7; 7') in einem Lagergehäuse (16), welches in das Ventilgehäuse (2; 2') eingesetzt ist, drehbar gelagert und gegen das Ventilgehäuse (2; 2') und gegen das Lagergehäuse (16) abgedichtet ist, wobei das Lagergehäuse (16) insbesondere aus zwei, insbesondere baugleichen Gehäusehälften (17) zusammengesetzt ist, die gegeneinander abgedichtet sind.

11. Ventil nach einem der vorhergehenden Ansprüche, **dadurch gekennzeichnet, dass** das Ventil als ein 3/2-Wegeventil (1) ausgeführt ist und das Ventilgehäuse (2) eine erste Ventilöffnung (3) und zwei bezüglich der Drehachse (6) diametral gegenüberliegende Ventilöffnungen (4, 5) aufweist, wobei die erste Ventilöffnung (3) mittels des Ventilkörpers (7) in der ersten Ventildrehstellung mit der einen und in der zweiten Ventildrehstellung mit der anderen der beiden diametral gegenüberliegenden Ventilöffnungen (4, 5) verbunden ist.

12. Ventil nach Anspruch 11, **dadurch gekennzeichnet, dass** die erste Ventilöffnung (3) auf der dem Elektromotor (8) gegenüberliegenden Seite des Ventilgehäuses (2) oder zwischen den beiden diametral gegenüberliegenden Ventilöffnungen (4, 5) angeordnet ist.

13. Ventil nach einem der Ansprüche 1 bis 10, **dadurch gekennzeichnet, dass** das Ventil als ein 2/2-Wegeventil (1') ausgeführt ist und das Ventilgehäuse (2') zwei bezüglich der Drehachse (6) diametral gegenüberliegende Ventilöffnungen (4, 5) aufweist, die mittels des Ventilkörpers (7') in der ersten Ventildrehstellung miteinander verbunden und und in der zweiten Ventildrehstellung gegeneinander gesperrt sind.

14. Baukastensystem (40) zur Herstellung eines Ventils (1, 1') nach einem der vorhergehenden Ansprüche, umfassend:
- einen Elektromotor (8),
- mehrere unterschiedliche Ventilgehäuse (2; 2'),
- mindestens einen Ventilkörper (7; 7'), insbesondere mindestens zwei unterschiedliche Ventilkörper (7; 7'),
- ein Lagergehäuse (16), und
- eine Drehkupplung (10).

15. Verfahren zum Beheben einer Fehlmontage eines Ventils (1, 1') nach einem der Ansprüche 1 bis 13, das mit seinen beiden einander diametral gegenüberliegenden Ventilöffnungen (4, 5) falsch herum in einer Leitung (34) montiert ist, mit folgenden Verfahrensschritten:
- Demontieren des Elektromotors (8) und der Drehkupplung (10);
- manuelles Verdrehen des Ventilkörpers (7; 7') um 180°, insbesondere mittels eines Werkzeugs (35);
- Steckverbinden der um 180° gedrehten Drehkupplung (10) mit dem Ventilkörper (7; 7'), um die Drehkupplung (10) und den Ventilkörper (7; 7') miteinander drehfest zu verbinden;
- Steckverbinden des Elektromotors (8) mit der Drehkupplung (10), um die Drehkupplung (10) und die Antriebswelle (9) des Elektromotors (8) miteinander drehfest zu verbinden; und
- Befestigen des Elektromotors (8) am Ventilgehäuse (2; 2').

## Geänderte Patentansprüche

### Geänderte Patentansprüche gemäss Regel 137(2) EPÜ.

1. Ventil (1; 1'), insbesondere 3/2- oder 2/2-Wegeventil, aufweisend:
- ein Ventilgehäuse (2; 2') mit mehreren Ventilöffnungen (3, 4, 5),
- einen im Ventilgehäuse (2; 2') um eine Drehachse (6) frei drehbar gelagerten Ventilkörper (7; 7'), der zwei der mehreren Ventilöffnungen (3, 4, 5) in einer ersten Ventildrehstellung miteinander verbindet und in einer gegenüber der ersten Ventildrehstellung um 90° verdrehten, zweiten Ventildrehstellung gegeneinander sperrt, wobei zwei Ventilöffnungen (4, 5) einander bezüglich der Drehachse (6) diametral gegenüberliegen,
- einen Elektromotor (8) zum Vor- und Zurückdrehen des Ventilkörpers (7; 7') jeweils um 90° zwischen der ersten und der zweiten Ventildrehstellung, und
- eine zwischen Ventilkörper (7; 7') und Elektromotor (8) angeordnete, starre Drehkupplung (10), die, jeweils drehfest, einenends mit dem Ventilkörper (7; 7') und anderenends mit einer Antriebswelle (9) des Elektromotors (8) steckverbunden ist,
wobei die Steckkontur der Antriebswelle (9) und die zugehörige Gegenstecckontur (23) der Drehkupplung (10) einen bezüglich der Drehachse (6) nichtdrehsymmetrischen Steckquerschnitt aufweisen,
**dadurch gekennzeichnet,**
**dass** der Elektromotor (8) ein Motorgehäuse (22) mit mehreren, insbesondere vier Fenstern (33) aufweist und die Drehkupplung (10) einen entlang der Drehrichtung des Ventilkörpers (7) verschiedenfarbigen Stellungsanzeiger (27) aufweist, der von außen jeweils durch die Fenster (33) sichtbar ist, um mittels seiner unterschiedlichen Farben die Öffnungs- und Schließstellungen des Ventikörpers (7; 7') in der ersten und der zweiten Drehstellung anzuzeigen, und dass die Drehkupplung (10) und der Stellungsanzeiger (27) als separate Bauteile ausgeführt sein, die miteinander steckverbunden sind, wobei die Drehkupplung (10) die Steckkontur (24) für den Ventilkörper (7; 7') und der Stellungsanzeiger (27) die Gegensteckkontur (23) für die Antriebswelle (9) aufweisen.

2. Ventil nach Anspruch 1, **dadurch gekennzeichnet, dass** der Elektromotor (8) am Ventilgehäuse (2; 2') in einer von zwei möglichen, gegeneinander um 180° um die Drehachse (6) des Ventilkörpers (7; 7') gewendeten Orientierungen befestigt ist.

3. Ventil nach Anspruch 1 oder 2, **dadurch gekennzeichnet, dass** die Steckkontur der Antriebswelle (9) und die zugehörige Gegensteckkontur (23) der Drehkupplung (10) einen T-förmigen Steckquerschnitt aufweisen.

4. Ventil nach nach einem der vorhergehenden Ansprüche, **dadurch gekennzeichnet, dass** der Elektromotor (8) und das Ventilgehäuse (2; 2') miteinander steckverbunden sind, wobei eine Steckkontur des Elektromotors (8) und eine zugehörige Gegensteckkontur (20) des Ventilgehäuses (2; 2') eine bezüglich der Drehachse (6) zweizählige Drehsymmetrie aufweisen.

5. Ventil nach einem der vorhergehenden Ansprüche, **dadurch gekennzeichnet, dass** der Stellungsanzeiger (27) ringförmig ausgebildet ist.

6. Ventil nach einem der vorhergehenden Ansprüche, **dadurch gekennzeichnet, dass** der Stellungsanzeiger (27) einen koaxial zur Drehachse (6) an der Drehkupplung (10) angeordneten Anzeigering (30) und mindestens ein verschiedenfarbiges Ringsegment (31), insbesondere ein 90°-Ringsegment, aufweist, das am Anzeigering (30) lösbar befestigt ist.

7. Ventil nach Anspruch 6, **dadurch gekennzeichnet, dass** der Stellungsanzeiger (27) zwei gleichfarbige Ringsegmente (31), insbesondere zwei gleichfarbige 90°-Ringsegmente, aufweist, die am Anzeigering (30) lösbar befestigt sind.

8. Ventil nach einem der vorhergehenden Ansprüche, **dadurch gekennzeichnet, dass** die Drehkupplung (10) und der Stellungsanzeiger (27) eine mindestens zweizählige Steckdrehsymmetrie aufweisen.

9. Ventil nach einem der vorhergehenden Ansprüche, **dadurch gekennzeichnet, dass** der Ventilkörper (7; 7') als eine einstückige Kugelwelle mit einem kugelförmigen Drehlagerabschnitt (11) und mit einem Wellenansatz (12) ausgebildet ist.

10. Ventil nach einem der vorhergehenden Ansprüche, **dadurch gekennzeichnet, dass** der Ventilkörper (7; 7') in einem Lagergehäuse (16), welches in das Ventilgehäuse (2; 2') eingesetzt ist, drehbar gelagert und gegen das Ventilgehäuse (2; 2') und gegen das Lagergehäuse (16) abgedichtet ist, wobei das Lagergehäuse (16) insbesondere aus zwei, insbesondere baugleichen Gehäusehälften (17) zusammengesetzt ist, die gegeneinander abgedichtet sind.

11. Ventil nach einem der vorhergehenden Ansprüche, **dadurch gekennzeichnet, dass** das Ventil als ein 3/2-Wegeventil (1) ausgeführt ist und das Ventilgehäuse (2) eine erste Ventilöffnung (3) und zwei bezüglich der Drehachse (6) diametral gegenüberliegende Ventilöffnungen (4, 5) aufweist, wobei die erste Ventilöffnung (3) mittels des Ventilkörpers (7) in der ersten Ventildrehstellung mit der einen und in der zweiten Ventildrehstellung mit der anderen der beiden diametral gegenüberliegenden Ventilöffnungen (4, 5) verbunden ist.

12. Ventil nach Anspruch 11, **dadurch gekennzeichnet, dass** die erste Ventilöffnung (3) auf der dem Elektromotor (8) gegenüberliegenden Seite des Ventilgehäuses (2) oder zwischen den beiden diametral gegenüberliegenden Ventilöffnungen (4, 5) angeordnet ist.

13. Ventil nach einem der Ansprüche 1 bis 10, **dadurch gekennzeichnet, dass** das Ventil als ein 2/2-Wegeventil (1') ausgeführt ist und das Ventilgehäuse (2') zwei bezüglich der Drehachse (6) diametral gegenüberliegende Ventilöffnungen (4, 5) aufweist, die mittels des Ventilkörpers (7') in der ersten Ventildrehstellung miteinander verbunden und und in der zweiten Ventildrehstellung gegeneinander gesperrt sind.

14. Baukastensystem (40) zur Herstellung eines Ventils (1, 1') nach einem der vorhergehenden Ansprüche, umfassend:
- einen Elektromotor (8), der ein Motorgehäuse (22) mit mehreren, insbesondere vier Fenstern (33) aufweist,
- mehrere unterschiedliche Ventilgehäuse (2; 2'),
- mindestens einen Ventilkörper (7; 7'), insbesondere mindestens zwei unterschiedliche Ventilkörper (7; 7'),
- ein Lagergehäuse (16), und
- eine Drehkupplung (10), die eine Steckkontur (24) für den mindestens einen Ventilkörper (7; 7') und einen entlang der Drehrichtung des mindestens einen Ventilkörpers (7) verschiedenfarbigen Stellungsanzeiger (27), welcher eine Gegensteckkontur (23) für eine Antriebswelle (9) des Elektromotors (8) aufweist, aufweist.

15. Verfahren zum Beheben einer Fehlmontage eines Ventils (1, 1') nach einem der Ansprüche 1 bis 13, das mit seinen beiden einander diametral gegenüberliegenden Ventilöffnungen (4, 5) falsch herum in einer Leitung (34) montiert ist, mit folgenden Verfahrensschritten:
- Demontieren des Elektromotors (8) und der Drehkupplung (10);
- manuelles Verdrehen des Ventilkörpers (7; 7') um 180°, insbesondere mittels eines Werkzeugs (35);
- Steckverbinden der um 180° gedrehten Drehkupplung (10) mit dem Ventilkörper (7; 7'), um die Drehkupplung (10) und den Ventilkörper (7; 7') miteinander drehfest zu verbinden;
- Steckverbinden des Elektromotors (8) mit der Drehkupplung (10), um die Drehkupplung (10) und die Antriebswelle (9) des Elektromotors (8) miteinander drehfest zu verbinden; und
- Befestigen des Elektromotors (8) am Ventilgehäuse (2; 2').
